# EUROPEAN PATENT SPECIFICATION

(11) **EP 0 565 202 B1**
(45) Date of publication and mention of the grant of the patent: **23.07.1997**
(21) Application number: 93201020.0
(22) Date of filing: 06.04.1993
(51) Int. Cl.: A23C 7/02

(54) **Method and apparatus for cleaning an installation for heat treating liquid products**
Verfahren und Vorrichtung zur Reinigung einer Wärmebehandlungsanlage für flüssige Produkte
Procédé et dispositif pour le nettoyage d'une installation de traitement thermique de produits liquides

(30) Priority: 06.04.1992 NL 9200648
(43) Date of publication of application: 13.10.1993
(73) Proprietor: FRIESLAND (FRICO-DOMO) COOPERATIEVE B.A., NL-8938 AN Leeuwarden (NL)
(72) Inventor: Hup, Gerhard, NL-8921 TX Leeuwarden (NL); Huizing, Warmold Hendrikus, NL-9461 TV Gieten (NL)
(74) Representative: Smulders, Theodorus A.H.J., Ir.

(56) References cited:
- FR-A- 1 478 000
- FR-A- 2 220 318
- GB-A- 2 052 949

## Description

This invention relates to a method for cleaning an installation for heat treating liquid products, this installation comprising at least a supply vat which communicates with an outlet via a first pipe system, a heat treatment section and a second pipe system, in which method the connection between the supply vat and the first pipe system is broken and subsequently a cleaning agent is supplied to the heat treatment installation at a point directly downstream of the broken connection, and after a given period the supply of cleaning agent is discontinued and the supply vat is connected to the first pipe system again.

This invention further relates to a heat treatment installation comprising a supply vat which is connected to an outlet via a first pipe system, a heat treatment section and a second pipe system, with a first shut-off valve being arranged in the first pipe system directly downstream of the supply vat.

Such a method and apparatus are disclosed in UK patent application 2 052 949. The outlet of such an installation is generally connected to a second installation to which the heat-treated liquid products are supplied for further processing. The heat treatment installation continuously subjects liquid products to a heat treatment and continuously discharges the treated liquid products via the outlet. The second installation, typically connected to the outlet of the heat treatment installation, generally requires a continuous supply of treated liquid product. The heat treatment installation may for instance be an installation for pasteurizing milk and the second installation connected to the pasteurizer may for instance be an installation for making cheese or an installation for bottling the pasteurized milk.

In particular in the heat treatment section and the second pipe sytem arranged downstream thereof, bacterial growth develops after some time, for instance after approx. 6 hours, which is not desirable. In order to end and remove the contamination of the heat treatment section and the second pipe system arranged downstream thereof by bacterial growth, two commonly used cleaning procedures are known.

The first cleaning procedure, hereinafter referred to as sterilization procedure, occurs approximately once every 10-16 hours and is the most extensive cleaning procedure. This procedure comprises the following steps:
a) pre-rinsing phase, in which water is supplied to the supply vat of the heat treatment installation and the product to be treated is gradually displaced from the heat treatment installation;
b) cleaning phase, in which cleaning liquid is supplied to the supply vat of the heat treatment installation. For instance, in the cleaning phase, lye may be supplied first, then water and then acid;
c) after-rinsing phase, in which again water is supplied to the supply vat so as to displace the cleaning agent from the heat treatment installation. After step c) the product to be heat treated can be supplied to the supply vat again and the normal heat treatment process and the process linked downstream thereof can be started up again.

Such an intensive cleaning or sterilization procedure takes approximately three quarters of an hour, during which time no cheese can be prepared in the case of a milk pasteurizer with a cheese making installation linked downstream thereof. This leads to considerable losses.

In order to minimize the frequency with which the sterilization procedure is to be carried out, a short cleaning operation is carried out in the interim, which is described in the British patent application referred to. In this short cleaning operation, which is for instance carried out every 6 hours, the connection between the supply vat and the first pipe system is broken by means of a first shut-off valve, and cleaning agent is supplied to the first pipe system at a point directly downstream of the first shut-off valve, so as to displace the product to be heat treated. When all of the product to be heat treated has been displaced from the heat treatment installation, the cleaning agent is recirculated in the heat treatment installation while being heated to a temperature of approx. 95-115°C in the heat treatment section of the heat treatment installation. Such a short cleaning operation takes approximately 15-30 minutes.

The known method offers the advantage that the supply vat of the heat treatment installation is not involved in the cleaning operation, so that only a small amount of product, viz., the amount present in the heat treatment section and in the first and second pipe systems, needs to be displaced.

A drawback of the known method is that the cleaning agent is heated by the heat treatment section of the installation which is to be cleaned, so that heating the cleaning agent takes rather much time.

The object of the present invention is to provide a method to replace the intermediate cleaning operation with a view to further shortening this intermediate cleaning while the cleaning result is at least maintained and preferably improved.

To that end, the method of the type described in the preamble is characterized according to the invention in that the cleaning agent is water which is supplied at the desired temperature for cleaning and is drained near the outlet of the heat treatment installation.

Because according to the invention the cleaning water is supplied at the desired temperature for the cleaning effect, the cleaning procedure, compared with the known cleaning method, is shortened by the time that is necessary for heating the water in the known method.

Another advantage is that the water in the method according to the invention is drained and is not recirculated in the heat treatment installation. Thus, always fresh cleaning material is used, which yields a better cleaning result.

In order not to expose the heat treatment installation to a substantial temperature shock, it is particularly advantageous when, in accordance with a further elaboration of the invention, the water has a supply temperature that rises gradually to 85-95°C. The initially cool water displaces the liquid product from the heat treatment installation, whereafter the subsequent hot water effectively disinfects the heat treatment installation.

To prevent the possibility of the heat treatment installation overheating the liquid product to be heat treated after a cleaning operation, due to the fact that the heat treatment installation still has a high temperature as a result of the cleaning operation, it is proposed, according to a further elaboration of the invention, to further supply an amount of cold water to the heat treatment installation at the end of the cleaning process.

Such a "plug" of cold water displaces the hot water and cools the heat treatment installation.

Adequate disinfection of the whole heat treatment installation is ensured when, in accordance with a further embodiment of the invention, the period during which warm water is to pass through the heat treatment installation is such that a minimum temperature of 78°C is achieved in the whole heat treatment installation.

When water of a temperature of approx. 85-95°C is supplied to the installation as described in GB patent application 2 052 949, the whole heat treatment installation will have a temperature of 78°C within 3 minutes. Accordingly, the whole cleaning operation, including the cold water phases before and after the hot water phase, interrupts the continuous process only for approximately 5 minutes, so that the productivity of the heat treatment installation and the installations connected thereto is increased considerably.

The present invention further provides a heat treatment installation comprising a supply vat which is connected to an outlet via a first pipe system, a heat treatment section and a second pipe system, with a first shut-off valve being arranged in the first pipe system directly downstream of the supply vat, this heat treatment installation being characterized by an auxiliary apparatus for cleaning the heat treatment installation utilizing the method according to the present invention, the auxiliary apparatus comprising a cleaning agent storage tank with a cleaning agent inlet, whilst the storage tank is connected to the first pipe system via a rinsing duct which, as viewed from the storage tank, successively includes a pump and a second shut-off valve, the connection to the first pipe system being provided directly downstream of the first shut-off valve, and the auxiliary apparatus comprises means for heating and maintaining the temperature of the amount of cleaning agent contained in the storage tank.

With such a combination of an auxiliary apparatus and a heat treatment installation, only the liquid product contained in the first pipe system, the heat treatment section and the second pipe system needs to be displaced. Thus, the liquid product present in the supply vat is not involved in the cleaning procedure. By virtue of the means for heating and maintaining the temperature of the amount of cleaning agent contained in the storage tank, the heat treatment installation can be cleaned at any desired time. The cleaning agent storage tank preferably contains an amount of cleaning agent such as is required to clean the heat treatment installation completely.

When hot water is used as a cleaning agent, it is particularly advantageous when the means for heating and maintaining the temperature of the amount of cleaning agent contained in the storage tank are designed as a recirculation duct including a third shut-off valve and a heat exchanger of which the primary ducts communicate with the recirculation duct and the secondary ducts are connected to a heating medium source, the recirculation duct being connected with the rinsing duct at a point between the pump and the second shut-off valve and having its other end connected with the storage tank.

When the second shut-off valve is closed, and hence the auxiliary apparatus is isolated from the heat treatment installation, the water in the storage tank can be heated by recirculation through the heat exchanger of which the secondary ducts are for instance connected to a source of steam. After each cleaning procedure, the storage tank is filled with eater and the water is heated to a desired temperature of approx. 85-95°C by recirculation through the heat exchanger, so that the auxiliary apparatus is ready for a next cleaning procedure. Since sources of heating medium are already provided for the heat treatment installation, heating the water in the manner outlined above is cheap and simple. It will be clear, however, that the storage tank may also be provided with heating elements functioning through electricity or combustion.

In order to make it possible to accurately control the temperature of the water delivered by the rinsing duct, it is particularly advantageous when, in accordance with a further elaboration of the invention, the auxiliary apparatus comprises a water admixing duct of which one end is connected to a source of water and the other end to the rinsing duct, the water admixing duct including a temperature-controlled control valve, of which the temperature measurement inlet is connected to a temperature sensor which is arranged in the rinsing duct downstream of the point where the water admixing duct is connected to the rinsing duct.

The use of such an auxiliary apparatus can prevent hot water from being passed immediately into the heat treatment installation, thus avoiding a temperature shock in the heat treatment installation. At the same time, the water admixing duct can be used to further pass an amount of cooler water into the heat treatment installation at the end of the cleaning procedure, so as to rapidly adjust this installation to a lower temperature.

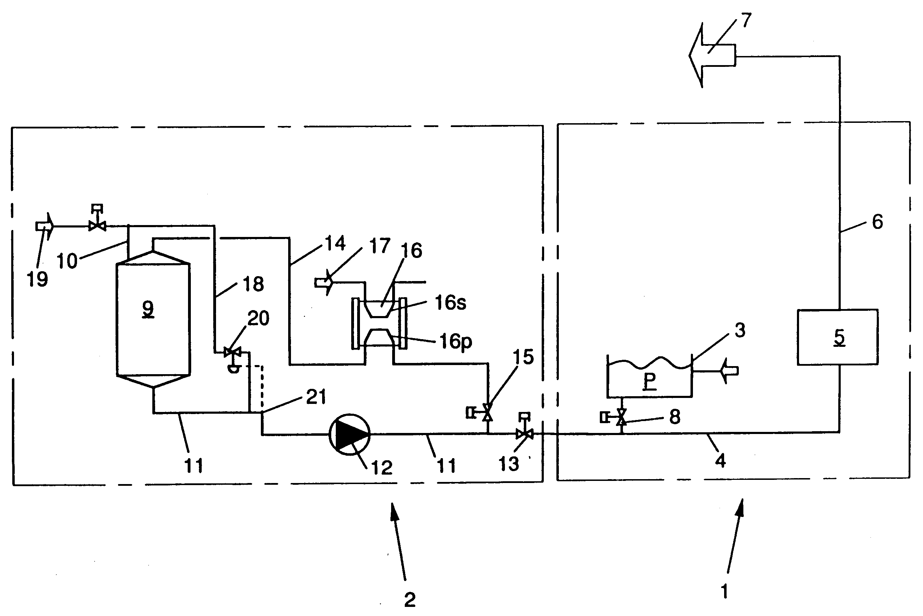

To clarify the invention, the method and the two apparatuses will now be described on the basis of an embodiment of a heat treatment installation with an auxiliary apparatus, with reference to the accompanying drawing.

The drawing schematically shows a heat treatment installation 1, as disclosed for instance in GB patent application 2,052,949, in the right-hand, framed part and an exemplary embodiment of an auxiliary apparatus 2 for cleaning the heat treatment installation in the left-hand, framed part.

The heat treatment installation 1 comprises at least a supply vat 3 which contains the liquid product P to be heat treated and which, via a first pipe system 4, a heat treatment section 5 and a second pipe system 6, is connected to an outlet 7. The heat treatment installation 1 is for instance a pasteurizing apparatus for milk. The outlet 7 is generally connected to further processing installations, such as for instance an installation for making cheese.

According to the invention, the heat treatment installation 1 comprises a first shut-off valve 8 provided directly downstream of the supply vat 3 in the first pipe system 4.

According to the invention, the auxiliary apparatus 2 comprises a cleaning agent storage tank 9 with a cleaning agent inlet pipe 10, the storage tank 9 being connected to the first pipe system 4 via a rinsing duct 11 which, as viewed from the storage tank 9, successively includes a pump 12 and a second shut-off valve 13, whilst the connection to the first pipe system 4 is provided directly downstream of the first shut-off valve 8.

The embodiment shown of the auxiliary apparatus 2 is designed for cleaning the heat treatment installation 1 with hot water. To that end, the auxiliary apparatus 2 further comprises a recirculation duct 14 including a third shut-off valve 15 and a heat exchanger 16 of which the primary ducts 16p communicate with the recirculation duct 14 and of which the secondary ducts 16s are connected to a source of heating medium 17. The recirculation duct 14 is connected to the rinsing duct 11 at a point between the pump 12 and the second shut-off valve 13 and its other end is connected to the storage tank 9. The auxiliary apparatus 2 further comprises a water admixing duct 18 of which one end is connected to a source of water 19, which also supplies the storage tank 9, and the other end is connected to the rinsing duct 11. The water admixing duct 18 comprises a temperature-controlled control valve 20 of which the temperature measurement inlet is connected to a temperature sensor 21, which is arranged in the rinsing duct 11 downstream of the connection of the water admixing duct 18 to the rinsing duct 11.

The operation of the two apparatuses shown is as follows:

When the heat treatment installation 1 is to be cleaned, for instance after six hours' uninterrupted operation, the first shut-off valve 8 of the heat treatment installation 1 is closed and the shut-off valve 13 is opened, the pump 12 is switched on and, depending on the temperature measured by the temperature sensor 21, the temperature-controlled valve 20 is opened. By these operations, the hot water of a temperature of approx. 85-95°C contained in the storage tank 9 will be passed, while cold water is being admixed, into the first pipe system 4 of the heat treatment installation. The water flows through the heat treatment installation 1 and is drained at the outlet 7 of the heat treatment installation 1. The temperature-controlled valve 20 is closed during the cleaning process, so that after some time only water of approx. 85-95°C is passed into the heat treatment installation 1.

The hot water is supplied until a minimum temperature of 78°C prevails in the whole heat treatment installation. At such a temperature, the heat treatment installation 1 is adequately disinfected.

At the end of the cleaning procedure, the temperature-controlled valve 20 is opened again, so that a further amount of cold water is supplied to the heat treatment installation 1, so that the hot water is displaced from the heat treatment installation and this installation is cooled again. This last step is important because otherwise there may arise the danger that the liquid product to be treated in the heat treatment installation 1 is heated to excess, which detracts from the quality of the liquid product.

At the end of the cleaning procedure, the second shut-off valve 13 is closed and the first shut-off valve 8 is opened again, so that the heat treatment installation can be switched on again.

The storage tank 9 of the auxiliary apparatus 2 is replenished again with water coming from the source of water 19. The water is heated by recirculation through the duct 14 and the heat exchanger 16 using steam coming from a source of steam 17, so that, when the temperature of the water in the storage tank is approx. 85-95°C again, the auxiliary apparatus is ready for a next cleaning procedure.

It will be clear that the invention is not limited to the embodiment described but that various modifications are possible within the framework of the invention. Essential is that with the method and the apparatus according to the invention a considerable shortening of the cleaning procedure is accomplished.

## Claims

1. A method for cleaning an installation for heat treating liquid products, this installation comprising at least a supply vat which communicates with an outlet via a first pipe system, a heat treatment section and a second pipe system, in which method the connection between the supply vat and the first pipe system is broken and subsequently a cleaning agent is supplied to the heat treatment installation at a point directly downstream of the broken connection, and after a given period the supply of cleaning agent is discontinued and the supply vat is connected to the first pipe system again, characterized in that the cleaning agent is water which is supplied at the desired temperature for cleaning and is drained near the outlet (7) of the heat treatment installation (1).

2. A method according to claim 1, characterized in that the water has a supply temperature of approx. 85-95°C.

3. A method according to claim 1, characterized in that the water has a supply temperature which rises gradually to approx. 85-95°C during the cleaning process.

4. A method according to any one of claims 1-3, characterized in that at the end of the cleaning process, further an amount of cold water is supplied to the heat treatment installation (1).

5. A method according to any one of claims 1-4, characterized in that the period during which water is passed through the heat treatment installation (1) is such that a minimum temperature of 78°C is achieved in the whole heat treatment installation (1).

6. A heat treatment installation comprising a supply vat which is connected to an outlet via a first pipe system, a heat treatment section and a second pipe system, with a first shut-off valve being arranged in the first pipe system directly downstream of the supply vat, characterized by an auxiliary apparatus (2) for cleaning the heat treatment installation (1) utilizing the method according to any one of the preceding claims, the auxiliary apparatus (2) comprising a cleaning agent storage tank (9) with a cleaning agent inlet pipe (10), whilst the storage tank (9) is connected to the first pipe system (4) via a rinsing duct (11) which, as viewed from the storage tank (9), successively includes a pump (12) and a second shut-off valve (13), the connection to the first pipe system (4) being provided directly downstream of the first shut-off valve (8), and the auxiliary apparatus (2) comprises means for heating and maintaining the temperature of the amount of cleaning agent contained in the storage tank (9).

7. A heat treatment installation according to claim 6, characterized in that the means for heating and maintaining the temperature of the amount of cleaning agent contained in the storage tank (9) are designed as a recirculation duct (14) including a third shut-off valve (15) and a heat exchanger (16) of which the primary ducts (16p) communicate with the recirculation duct (14) and the secondary ducts (16s) are connected to a heating medium source (17), the recirculation duct (14) being connected to the rinsing duct (11) at a point between the pump (12) and the second shut-off valve (13) and having its other end connected to the storage tank (9).

8. A heat treatment installation according to claim 7, characterized in that the auxiliary apparatus (2) comprises a water admixing duct (18) of which one end is connected to a source of water (19) and the other end to the rinsing duct (11), the water admixing duct (18) including a temperature-controlled control valve (20), of which the temperature measurement inlet is connected to a temperature sensor (21) which is arranged in the rinsing duct (11) following the point where the water admixing duct (18) is connected to the rinsing duct (11).

## Patentansprüche

1. Verfahren zur Reinigung einer Anlage zum Wärmebehandeln von flüssigen Produkten, wobei diese Anlage zumindest einen Vorratsbehälter aufweist, der über ein erstes Rohrleitungssystem mit einem Auslauf verbunden ist, sowie einen Wärmebehandlungsbereich und ein zweites Rohrleitungssystem enthält, wobei während dieses Verfahrens die Verbindung zwischen dem Vorratsbehälter und dem ersten Rohrleitungssystem unterbrochen und daraufhin der Wärmebehandlungsanlage direkt stromab der unterbrochenen Verbindung ein Reini-gungsmittel zugeführt wird, sowie nach einem vorgegebenen Zeitraum die Zufuhr des Reinigungsmittels unterbrochen und der Vorratsbehälter wieder mit dem ersten Rohrleitungssystem verbunden wird,
dadurch gekennzeichnet,
daß es sich bei dem Reinigungsmittel um Wasser handelt, das mit der gewünschten Reinigungstemperatur zugeführt und nahe des Auslaufes (7) der Wärmebehandlungsanlage (1) abgelassen wird.

2. Verfahren nach Anspruch 1, gekennzeichnet durch eine Zuführtemperatur des Wassers von etwa 85° C bis 95°C.

3. Verfahren nach Anspruch 1, gekennzeichnet durch eine während des Reinigungsprozesses allmählich auf etwa 85° C bis 95°C ansteigende Zuführtemperatur des Wassers.

4. Verfahren nach einem der Ansprüche 1 bis 3, dadurch gekennzeichnet, daß am Ende des Reinigungsprozesses der Wärmebehandlungsanlage (1) zudem eine Menge kalten Wassers zugeführt wird.

5. Verfahren nach einem der Ansprüche 1 bis 4, dadurch gekennzeichnet, daß der Zeitraum, während dessen Wasser durch die Wärmebehandlungsanlage (1) hindurchgeführt wird, so bemessen ist, daß eine Mindesttemperatur von 78°C in der gesamten Wärmebehandlungsanlage (1) erhalten wird.

6. Wärmebehandlungsanlage, mit einem Vorratsbehälter, der über ein erstes Rohrleitungssystem mit einem Auslauf verbunden ist, einem Wärmebehandlungsbereich und einem zweiten Rohrleitungssystem, mit einem im ersten Rohrleitungssystem dem Vorratsbehälter unmittelbar nachgeordneten ersten Absperrventil, gekennzeichnet durch eine Zusatzeinrichtung (2) zum Reinigen der Wärmebehandlungsanlage (1) unter Einsatz des Verfahrens nach einem der vorhergehenden Ansprüche, wobei die Zusatzeinrichtung (2) einen Behälter (9) für Reinigungsmittel mit einem Zuleitungsrohr (10) für das Reinigungsmittel aufweist, während der Behälter (9) für Reinigungsmittel über eine Spülleitung (11) mit dem ersten Rohrleitungssystem (4) verbunden ist, und die Spülleitung, vom Behälter (9) her gesehen, nacheinander eine Pumpe (12) und ein zweites Absperrventil (13) enthält, wobei die Verbindung zum ersten Rohrleitungssystem (4) unmittelbar nach dem ersten Absperrventil (8) vorgesehen ist und die Zusatzeinrichtung (2) Mittel zum Erwärmen und zur Temperaturerhaltung des im Behälter (9) enthaltenen Reinigungsmittels umfaßt.

7. Wärmebehandlungsanlage nach Anspruch 6, dadurch gekennzeichnet, daß das Mittel zum Erwärmen und zur Temperaturerhaltung des im Behälter (9) enthaltenen Reinigungsmittels als Rückführleitung (14) mit einem dritten Absperrventil (15) und einem Wärmetauscher (16) ausgebildet ist, dessen Primärleitungen (16p) mit der Rückführleitung (14) und dessen Sekundärleitungen (16s) mit einer Heizmittelquelle (17) in Verbindung stehen, wobei die Rückführleitung (14) an die Spülleitung (11) an einer Stelle zwischen der Pumpe (12) und dem zweiten Absperrventil (13) angeschlossene und deren anderes Ende mit dem Behälter (9) verbunden ist.

8. Wärmebehandlungsanlage nach Anspruch 7, dadurch gekennzeichnet, daß die Zusatzeinrichtung (2) eine Wasserzumischleitung (18) enthält, die an einem Ende mit einer Wasserquelle (19) und am anderen Ende mit der Spülleitung (11) verbunden ist, wobei die Wasserzumischleitung (18) ein temperaturgesteuertes Regelventil (20) enthält, dessen Temperaturmeßeinlaß mit einem Temperaturfühler (21) verbunden ist, der in der Spülleitung (11) nach der Stelle vorgesehen ist, an welcher die Wasserzumischleitung (18) an die Spülleitung (11) angeschlossen ist.

## Revendications

1. Procédé de nettoyage d'une installation servant à traiter des produits liquides par la chaleur, cette installation comprenant au moins un réservoir d'alimentation qui communique avec une sortie par un premier système de canalisations, un étage de traitement par la chaleur et un deuxième système de canalisations, procédé dans lequel la connexion entre le réservoir d'alimentation et le premier système de canalisations est coupée puis un agent de nettoyage est envoyé dans l'installation de traitement par la chaleur en un point situé directement en aval de la connexion coupée et après un laps de temps donné, l'envoi d'agent de nettoyage est arrêté et le réservoir d'alimentation est de nouveau raccordé au premier système de canalisations, caractérisé en ce que l'agent de nettoyage est de l'eau qui est envoyée à la température souhaitée pour le nettoyage et qui est évacuée près de la sortie (7) de l'installation (1) de traitement par la chaleur.

2. Procédé selon la revendication 1, caractérisé en ce que l'eau a une température d'arrivée d'environ 85 à 95°C.

3. Procédé selon la revendication 1, caractérisé en ce que l'eau a une température d'arrivée qui augmente progressivement jusqu'à environ 85 à 95°C pendant l'opération de nettoyage.

4. Procédé selon l'une quelconque des revendication 1 à 3, caractérisé en ce que, à la fin de l'opération de nettoyage, une quantité supplémentaire d'eau froide est envoyée à l'installation (1) de traitement par la chaleur.

5. Procédé selon l'une quelconque des revendication 1 à 4, caractérisé en ce que le temps pendant lequel l'eau traverse l'installation (1) de traitement par la chaleur est tel qu'une température minimale de 78°C est atteinte dans toute l'installation (1) de traitement par la chaleur.

6. Installation de traitement par la chaleur comprenant un réservoir d'alimentation qui est raccordé à une sortie par un premier système de canalisations, un étage de traitement par la chaleur et un deuxième système de canalisations, une première vanne de coupure étant placée dans le premier système de canalisations juste en aval du réservoir d'alimentation, caractérisée par un appareil auxiliaire (2) servant au nettoyage de l'installation (1) de traitement par la chaleur et utilisant le procédé conforme à l'une quelconque des précédentes revendications, l'appareil auxiliaire (2) comprenant un réservoir (9) de stockage d'agent de nettoyage avec un tube (10) d'entrée d'agent de nettoyage, le réservoir de stockage (9) étant raccordé au premier système de canalisations (4) par un conduit de rinçage (11) qui, vu depuis le réservoir de stockage (9), contient successivement une pompe (12) et une deuxième vanne de coupure (13), la connexion au premier système de canalisations (4) étant placée directement en aval de la première vanne de coupure (8), et l'appareil auxiliaire (2) comprend des moyens servant à chauffer et maintenir en température la quantité d'agent de nettoyage contenue dans le réservoir de stockage (9).

7. Installation de traitement par la chaleur selon la revendication 6, caractérisée en ce que les moyens servant à chauffer et maintenir en température la quantité d'agent de nettoyage contenue dans le réservoir de stockage (9) sont conçus comme un conduit de recirculation (14) contenant une troisième vanne de coupure (15) et un échangeur de chaleur (16) dont les conduits primaires (16p) communiquent avec le conduit de recirculation (14) et les conduits secondaires (16s) sont raccordés à une source (17) de fluide de chauffage, le conduit de recirculation (14) étant raccordé au conduit de rinçage (11) en un point situé entre la pompe (12) et la deuxième vanne de coupure (13) et ayant son autre extrémité raccordée au réservoir de stockage (9).

8. Installation de traitement par la chaleur selon la revendication 7, caractérisée en ce que l'appareil auxiliaire (2) comprend un conduit (18) de mélangeage de l'eau dont une extrémité est raccordée à une source d'eau (19) et l'autre extrémité au conduit de rinçage (11), le conduit (18) de mélangeage de l'eau contenant une vanne de commande (20) régulée en température dont l'entrée de mesure de la température est couplée à un capteur de température (21) disposé dans le conduit de rinçage (11) après le point où le conduit (18) de mélangeage de l'eau est raccordé au conduit de rinçage (11).
